# FASCICULE DE BREVET EUROPEEN

(11) **EP 3 685 080 B1**
(45) Date de publication et mention de la délivrance du brevet: **01.06.2022**
(21) Numéro de dépôt: 18803732.9
(22) Date de dépôt: 21.09.2018
(51) Int. Cl.: F16K 3/24, F16K 3/26, F16K 3/34

(54) **VANNE THERMOSTATIQUE POUR VÉHICULE AUTOMOBILE**
THERMOSTATVENTIL FÜR KRAFTFAHRZEUG
THERMOSTATIC VALVE FOR MOTOR VEHICLE

(30) Priorité: 21.09.2017 FR 1758763
(43) Date de publication de la demande: 29.07.2020
(73) Titulaire: NOVARES France, 92140 Clamart (FR)
(72) Inventeur: QUEVALLIER, Jean-Claude, 59810 Lesquin (FR)
(74) Mandataire: Germain Maureau
(86) Numéro de dépôt international: PCT/FR2018/052300
(87) Numéro de publication internationale: WO 2019/058062

(56) Documents cités:
- EP-A2- 1 659 352
- WO-A2-2012/036937
- FR-A1- 2 919 704

## Description

La présente invention concerne le domaine des vannes thermostatiques. Une vanne thermostatique est typiquement utilisée dans le domaine de la régulation thermique automatique pour des circuits de fluide (gaz, eau, huile, ...).

De manière connue, une vanne thermostatique comprend un corps creux fermé percé d'une première ouverture et d'une deuxième ouverture et comprenant un obturateur séparant les deux ouvertures de manière étanche. L'obturateur est sensible à la température du fluide de manière à s'ouvrir au-dessus d'une température seuil et à se refermer en dessous de ladite température seuil.

Une application illustrative dans le domaine automobile est la réalisation de boîtiers d'entrée d'eau (convergent) ou de boîtiers de sortie d'eau (divergent).

L'obturateur d'une vanne thermostatique comprend typiquement un actionneur thermostatique, telle une capsule à cire, et un volet actionné par l'actionneur thermostatique. La capsule à cire comprend un cylindre rempli d'une cire sensible à la température. La cire repousse une tige sous l'effet d'un important changement de volume accompagnant un changement de phase solide/liquide, se produisant à une température seuil ou température de début d'ouverture.

De manière classique, le volet ou clapet est disposé perpendiculairement à l'axe de l'actionneur thermostatique. Une telle disposition est avantageuse en ce qu'il est aisé de réaliser l'étanchéité d'un tel volet pour un coût raisonnable. Un inconvénient est cependant, en cas de présence d'une différence entre les pressions appliquées d'un côté et de l'autre côté du volet, que l'actionneur thermostatique doit, lors de l'ouverture du clapet, développer un effort supplémentaire afin de vaincre cette différence de pression. Ce nécessaire effort supplémentaire introduit un retard à l'ouverture équivalent à une augmentation de la température seuil. Aussi la vanne thermostatique présente une sensibilité à la pression différentielle modifiant sa température seuil.

De manière alternative il est encore connu de disposer le volet ou piston parallèle à l'axe de l'actionneur thermostatique. Une telle disposition est avantageuse en ce qu'en présence d'une pression différentielle, cette dernière est perpendiculaire à l'axe de l'actionneur thermostatique et ainsi ne produit sensiblement aucun effort selon l'axe de l'actionneur thermostatique. Un inconvénient est cependant que l'ajustage entre le piston et une chemise correspondante doit être précis pour assurer l'étanchéité. De plus du fait de l'ajustage précis, le piston frotte sur la chemise. Aussi doit-il être réalisé en un matériau résistant à l'usure. Aussi tous les dispositifs connus de ce type comportent un piston métallique réalisé selon des tolérances précises, et le plus souvent une chemise également réalisée selon des tolérances précises. Ceci entraîne une augmentation drastique du coût de la vanne thermostatique, la réservant à des applications haute pression (poids lourd) ou hautes performances (véhicule haut de gamme).

On connaît par le document WO 2012/036937 une vanne de régulation de température à trois étages pouvant être constituée de matériau plastique.

Il existe un besoin de fournir une vanne thermostatique peu sensible à la pression différentielle et à bas coût.

A cet effet, selon un premier aspect, l'invention a pour objet une vanne de régulation thermostatique pour un circuit de fluide d'un véhicule automobile selon la revendication 1. De telles caractéristiques permettent avantageusement de réaliser une vanne thermostatique peu sensible à la pression différentielle tout en garantissant un faible coût de fabrication.

Selon d'autres caractéristiques, la vanne thermostatique de l'invention comporte une ou plusieurs des caractéristiques optionnelles suivantes considérées seules ou selon toutes les combinaisons possibles :
- le corps comprend de plus un conduit configuré pour être relié au circuit de fluide, le conduit débouchant en aval de l'actionneur thermostatique,
- la cage fixe et/ou la cage mobile présentent des formes tronconiques sensiblement complémentaires,
- la cage mobile est engagée sur la face intérieure de la cage fixe et la cage fixe est pourvue d'au moins une fenêtre,
- la cage mobile est engagée sur la face extérieure de la cage fixe et la cage fixe est pourvue d'au moins une fenêtre,
- ladite au moins une fenêtre présente une forme fonction d'une loi d'ouverture souhaitée,
- ladite forme est préférentiellement rectangulaire pour une loi proportionnelle, triangulaire pour une loi continûment variée, ou encore étagée pour une loi à débit étagé,
- la vanne thermostatique comprend encore un premier moyen d'étanchéité statique, tel un joint torique, disposé, préférentiellement axialement, entre la cage fixe et une première extrémité de la cage mobile et un deuxième moyen d'étanchéité statique, tel un joint torique, disposé, préférentiellement axialement, entre la cage fixe et une deuxième extrémité opposée du piston, de telle manière à assurer une étanchéité statique, la cage mobile étant en position fermée.

Selon un autre aspect, l'invention a pour objet un boîtier d'entrée de fluide ou de sortie de fluide, pour régulation thermostatique d'un circuit de fluide, comprenant une telle vanne thermostatique.

L'invention sera davantage comprise à la lecture de la description non limitative qui va suivre de deux formes de réalisation de, faite en référence aux figures ci-annexées.
- La figure 1 présente en vue schématique de profil coupée une vanne thermostatique selon un premier mode de réalisation de l'invention, en position fermée,
- la figure 2 présente la vanne thermostatique de la figure précédente en position ouverte,
- la figure 3 présente en vue perspective une cage fixe selon un mode de réalisation de l'invention,
- la figure 4 présente en vue perspective une cage mobile selon un mode de réalisation de l'invention,
- la figure 5 présente en vue perspective, la cage mobile et la cage fixe des deux figures précédentes assemblées,
- la figure 6 présente trois formes illustratives de fenêtres, et les lois de débit correspondantes,
- la figure 7 présente en vue schématique de profil coupée une vanne thermostatique selon un deuxième mode de réalisation de l'invention, en position fermée,
- la figure 8 présente la vanne thermostatique de la figure précédente en position ouverte,
- les figures 9 et 10 présentent une variante de réalisation de l'invention
- les figures 11 et 12 présentent une autre variante de réalisation de l'invention.

Par simplification, les éléments qui se retrouvent à l'identique dans les dans les différentes formes de réalisation de l'invention portent des références identiques.

L'invention concerne une vanne thermostatique.

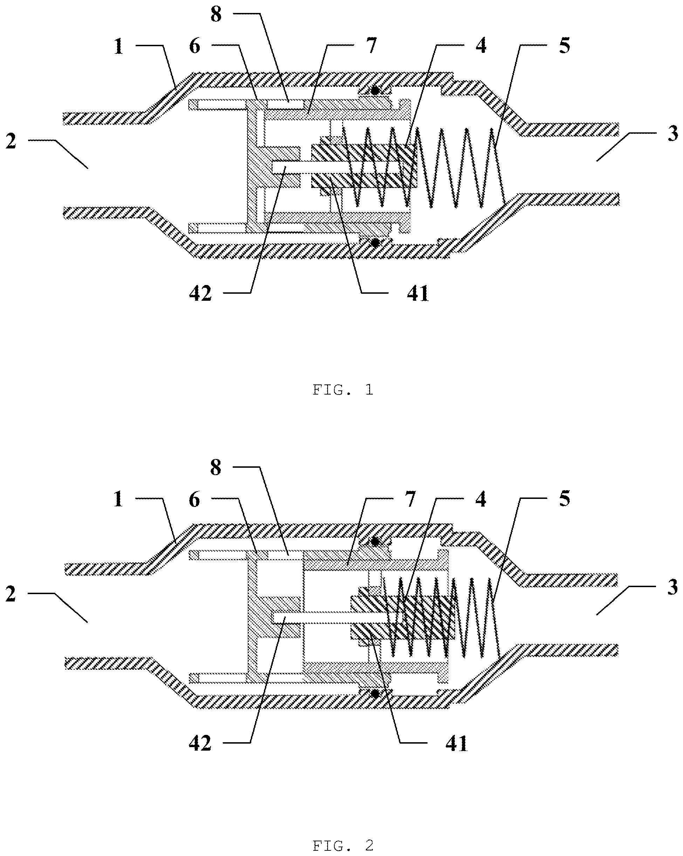

Telle qu'illustrée aux figures 1 et 2 dans une première forme de réalisation, une telle vanne thermostatique comprend, de manière connue, un corps 1 creux fermé et percé uniquement d'une première ouverture 2 et d'une deuxième ouverture 3 débouchant toutes deux dans le corps 1. Un obturateur sépare la première ouverture 2 de la deuxième ouverture 3 et peut être sélectivement ouvert ou fermé. Lorsque l'obturateur est fermé la première ouverture 2 est isolée de la deuxième ouverture 3. Lorsque l'obturateur est ouvert la première ouverture 2 et la deuxième ouverture 3 sont en communication fluidique. La vanne thermostatique comprend encore un actionneur thermostatique 4 et un moyen de rappel 5 antagoniste.

Selon l'invention, l'obturateur comprend une cage fixe 6 percée d'au moins une fenêtre 8 radiale et une cage mobile 7, sensiblement ajustée à la cage fixe 6 et apte à coulisser relativement à la cage fixe 6 de manière à sélectivement obturer ou libérer ladite au moins une fenêtre 8. Lorsque la cage mobile 7 obture ladite au moins une fenêtre 8, tel qu'illustré à la figure 1, l'obturateur et la vanne thermostatique sont fermés. Lorsque la cage mobile 7 libère ladite au moins une fenêtre 8, tel qu'illustré à la figure 2, l'obturateur et la vanne thermostatique sont ouverts. L'actionneur thermostatique 4, et plus particulièrement son corps 41, est sensible à la température de telle manière à ce que l'actionneur thermostatique 4 se déploie, en poussant une tige 42, lorsque la température dépasse une température seuil ou de début d'ouverture. Lors de son déploiement il entraîne la cage mobile 7, vers la droite dans le plan de la figure, libérant ainsi la ou les fenêtres 8 et ouvrant ainsi l'obturateur. Le moyen de rappel 5, au contraire, lorsque la température repasse en dessous de la température seuil, repousse la tige 42 dans le corps 41, ramène la cage mobile 7 en position d'obturation de la ou des fenêtres 8 et ainsi ferme l'obturateur.

Selon une caractéristique avantageuse, la cage mobile 7,70 coulisse relativement à la cage fixe 6 selon un axe sensiblement confondu avec l'axe de l'actionneur thermostatique 4. La cage mobile 7,70 se déplace typiquement en translation selon son axe. Ainsi, en cas de présence d'une pression différentielle entre les deux ouvertures 2, 3, l'effort induit par cette pression s'exerce de manière perpendiculaire à l'effort exercé par l'actionneur thermostatique 4 et ainsi ne s'oppose pas à son action et à l'ouverture de l'obturateur. Selon une autre caractéristique avantageuse, la cage mobile 7,70 est en matière plastique, afin de proposer un produit de coût de fabrication raisonnable.

La réalisation de la cage mobile 7 en matière plastique s'entend d'une fabrication classique, permettant la grande série et un coût réduit, telle que par exemple par moulage classiquement utilisé en plasturgie et selon des méthodes classiques permettant d'atteindre des tolérances standard. Il s'ensuit que, sur ces bases, l'homme du métier ne sait pas résoudre les problèmes d'étanchéité, du moins pas avec les niveaux de fuite nécessaires aux applications envisagées pour les vannes thermostatiques.

Une première caractéristique qui va permettre d'améliorer l'étanchéité jusqu'à atteindre les faibles niveaux de fuite requis, est de réaliser la cage mobile 7 de manière à ce qu'il soit plus souple que la cage fixe 6. Cette caractéristique de souplesse relative est de plus combinée avec une disposition particulière, selon laquelle la cage mobile 7 est disposée relativement à la cage fixe 6, du côté de la pression. Dans la plupart des applications, et particulièrement celles caractérisée en ce que apparaît une pression différentielle, la pression est plus importante d'un côté, d'une ouverture 2 , 3, et ce côté reste généralement le même : on peut ainsi l'appeler le côté de la pression. Autrement dit la cage mobile 7 est disposée à l'intérieur de la cage fixe 6 comme illustré aux figures 1, 2 lorsque la pression vient du côté de la deuxième ouverture 3.

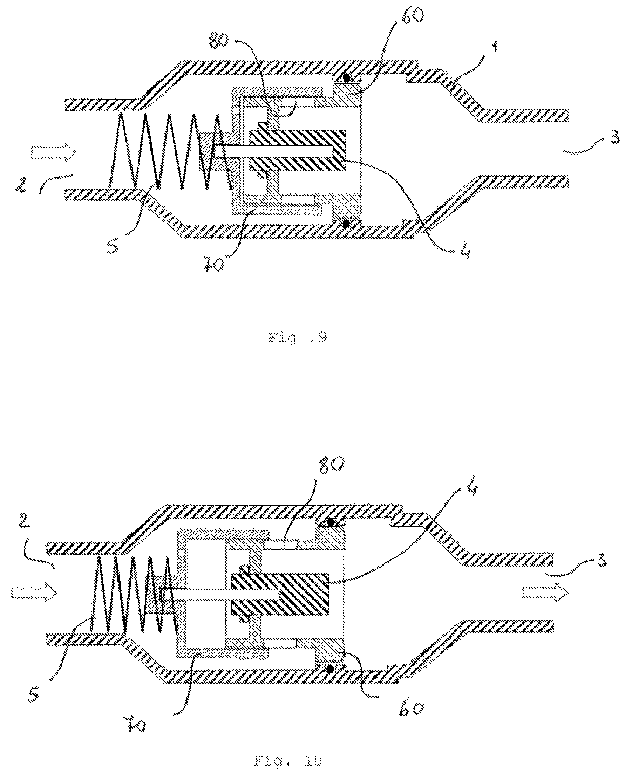

Alternativement, comme cela est montré aux figures 9 et 10 la cage mobile 70 peut être disposée à l'extérieur de la cage fixe 60 si la pression vient du côté de la première ouverture 2.

La cage mobile 7,70 est ainsi toujours disposée entre la pression et la cage fixe 6. Ainsi, sous l'effet de la pression, la cage mobile 7,70 est appuyée contre la cage fixe 6. Du fait de sa souplesse, sous l'effet de cet appui, la cage mobile 7,70 peut se déformer de manière à épouser les formes de la cage fixe 6, réduire les jeux éventuels entre la cage mobile 7,70 et la cage fixe 6, et ainsi améliorer l'étanchéité entre eux.

La souplesse de la cage mobile 7,70 peut être obtenue par tout moyen. Un premier moyen consiste à choisir une matière intrinsèquement plus souple que celui de la cage fixe.

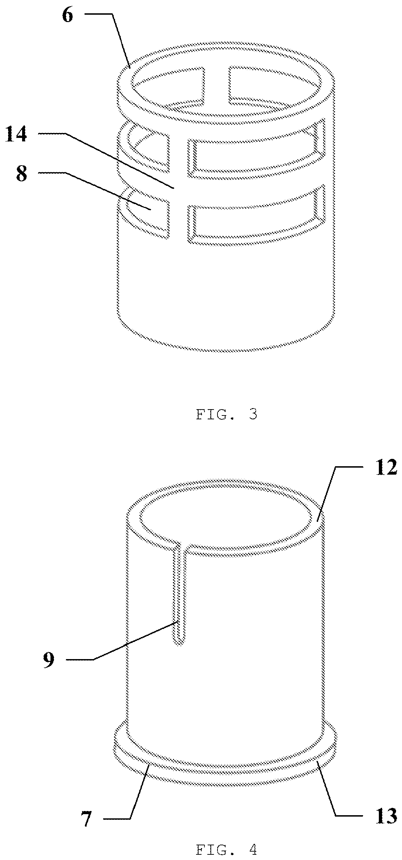

Un autre moyen, complémentaire ou alternatif du précédent, pour obtenir une souplesse du piston 7, est de le munir d'au moins une découpe longitudinale 9. Ainsi, cette ou ces découpes étant longitudinales, vont permettre au piston 7, sous l'action de la pression, de se déformer et d'augmenter ou diminuer sa section, afin de l'adapter à la section de la cage fixe 6. La ou les découpes longitudinales 9 sont avantageusement disposées préférentiellement dans la zone de la ou des fenêtres 8, zone caractérisée en ce que est particulièrement recherchée l'étanchéité. Afin que la ou les découpes longitudinales 9 ne constitue pas une ouverture laissant passer le fluide, la cage fixe 6 comprend avantageusement au moins une surface pleine 14 en regard de chacune desdites découpes longitudinales 9. Autrement dit la ou les découpes longitudinales 9 ne sont pas disposées en regard d'une fenêtre 8. Un mode de réalisation du piston 7 et de la cage fixe 6 répondant à ces caractéristiques est illustré aux figures 3, 4 et 5.

La ou les découpes longitudinales 9 sont doublement avantageuses. En plus de la fonction précédemment décrite de permettre de rendre la cage mobile 7,70 plus souple, cette ou ces découpes longitudinales 9 offrent de plus une fonction anti-coincement. En effet tant la cage mobile 7,70 que la cage fixe 6,60 lorsqu'elles sont réalisées par moulage, présentent inévitablement un angle de dépouille nécessaire au démoulage et leur conférant une conicité. Même si elle peut être très faible, et du fait même de sa faiblesse, cette conicité entraîne de manière connue (Cf. cône Morse), un risque de coincement. Un tel coincement est ici préjudiciable en ce qu'il entraîne une augmentation importante de l'effort d'ouverture de la vanne, effort que devrait produire l'actionneur thermostatique 4. Cependant, la présence d'au moins une découpe longitudinale 9 supprime avantageusement ce risque de coincement.

Il a été vu que la cage mobile 7,70 et/ou la cage fixe 6,60 présentent des formes tronconiques. Selon un mode de réalisation avantageux, ces conicités sont orientées de même sens de manière à ce que les formes de la cage mobile 7,70 et de la cage fixe 6 en regard soient sensiblement complémentaires.

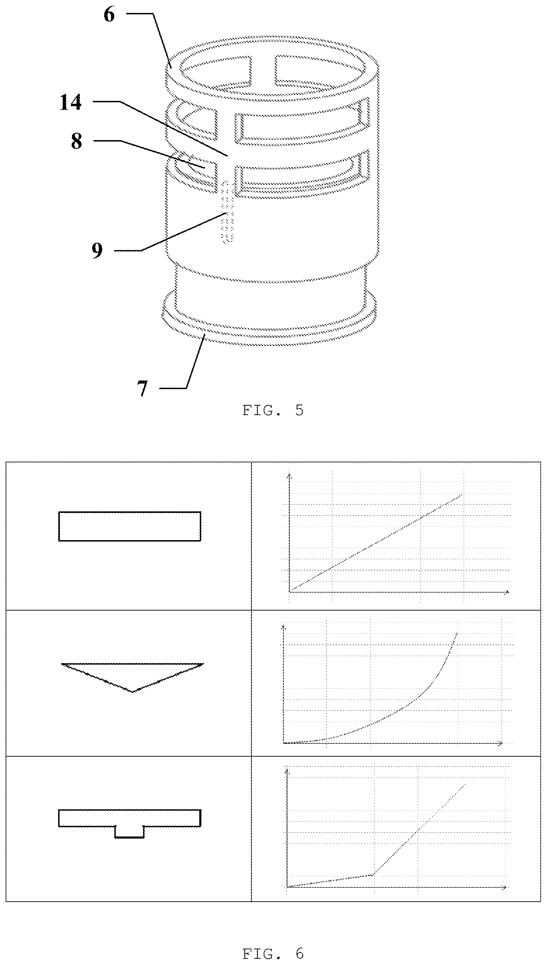

Au cours du mouvement de translation du piston 7,70 relativement à la cage fixe 6,60, une fenêtre 8,80 est progressivement découverte. Aussi, la forme d'une fenêtre 8,80, et tout particulièrement son profil dans le sens longitudinal, aligné avec ledit mouvement de translation, détermine une loi de débit au travers de la vanne thermostatique en fonction de la course de la cage mobile 7,70. Aussi un avantage de l'invention est qu'il est aisé de concevoir est de réaliser une loi de débit donnée en définissant la forme de la ou des fenêtres 8,80. La figure 6 illustre ainsi plusieurs exemples de formes de fenêtres 8,80 avec en regard les caractéristiques de loi de débit obtenues. Ainsi pour une fenêtre 8,80 rectangulaire (en haut), soit de section longitudinale constante, la loi de débit est proportionnelle ou linéaire. Pour une fenêtre 8 triangulaire (au milieu), soit de section longitudinale continument augmentée (respectivement diminuée pour un triangle inversé), la loi de débit est continument variée. Pour une fenêtre 8,80 étagée (en bas), soit de section longitudinale étagée ou croissante par palier, la loi de débit est étagée, avec des pentes variables par palier.

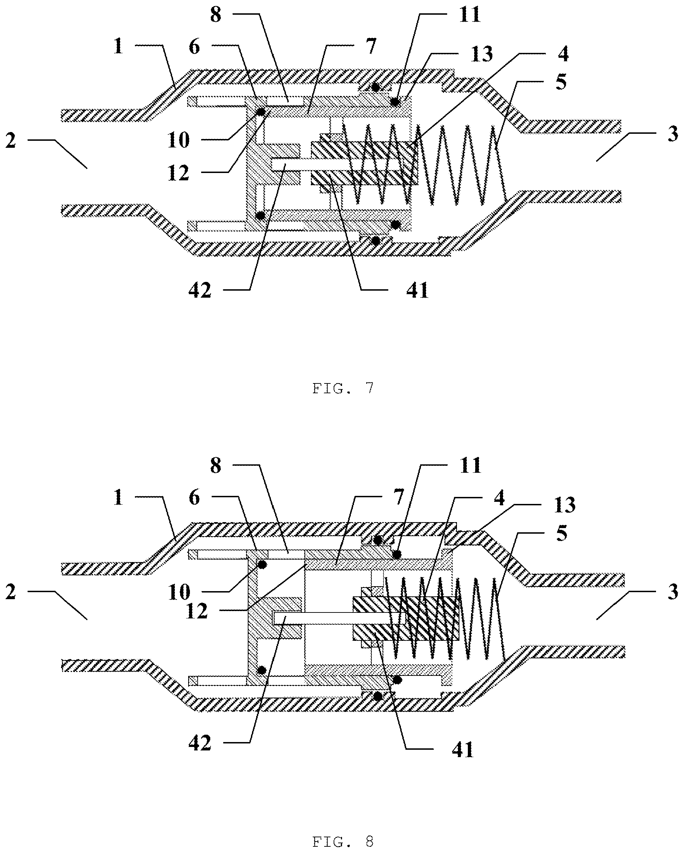

Il convient de remarquer que l'étanchéité de la vanne thermostatique est principalement recherchée lorsque celle-ci est en position fermée. Aussi selon une autre caractéristique, plus particulièrement illustrée aux figures 7 et 8, l'étanchéité peut encore être réalisée de manière statique par une disposition s'appliquant dans cette position fermée. Pour cela, la vanne thermostatique comprend encore un premier moyen d'étanchéité statique 10, disposé, préférentiellement axialement, entre la cage fixe 6 et une première extrémité 12 du piston 7 et un deuxième moyen d'étanchéité statique 11, disposé, préférentiellement axialement, entre la cage fixe 6 et une deuxième extrémité 13 opposée du piston 7. Ces deux moyens d'étanchéité statique sont disposés de telle manière à assurer une étanchéité statique, entre la cage mobile 7 et la cage fixe 6, lorsque la cage mobile 7 est en position fermée. Chacun des moyens d'étanchéité statique 10, 11 peut être de tout type apte à assurer une telle étanchéité lorsque comprimé axialement. Il peut ainsi s'agir d'un joint torique ou de tout autre type équivalent.

Cette caractéristique nécessite une précision et une qualité de réalisation importante car la cage mobile 7 doit, en fin de course de fermeture, comprimer sensiblement simultanément, les deux moyens d'étanchéité 10, 11 contre la cage fixe 6.

Cette caractéristique d'obtention de l'étanchéité, peut être alternative des autres caractéristiques d'obtention de l'étanchéité : souplesse du piston et/ou découpes longitudinales, ou lui être complémentaire.

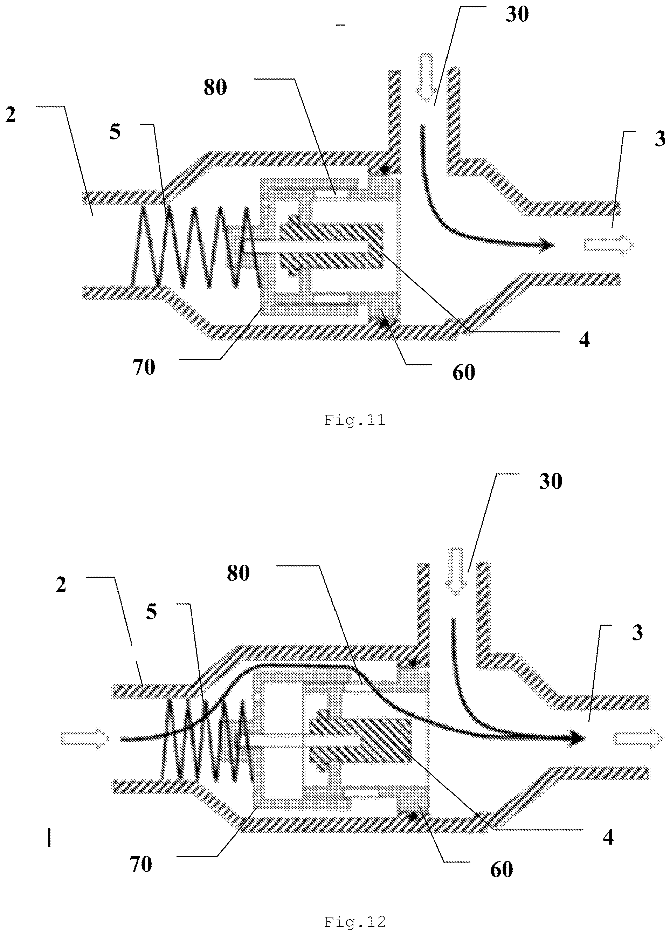

Les figures 10 et 11 montrent respectivement en positions fermée et ouverte une autre variante de réalisation de l'invention dans laquelle le corps 1 comprend dans sa partie aval (par rapport au sens d'écoulement du fluide) deux conduits à savoir un conduit de sortie 3 et une conduit d'entrée 30. Le conduit de sortie 3 est permanent tandis que la conduit d'entrée 30 va débiter plus ou moins selon que le clapet est ouvert ou fermé. Le débit circulant dans le conduit d'entrée 30 est utile pour, en condition fermée de la vanne thermostatique, amener l'information sur la température d'eau qui va activer la vanne thermostatique et autoriser le passage de fluide au travers de la vanne.

## Revendications

1. Vanne de régulation thermostatique pour un circuit de fluide d'un véhicule automobile comprenant un corps (1) creux fermé, une première ouverture (2), une deuxième ouverture (3) débouchant dans le corps (1), un obturateur séparant la première ouverture (2) de la deuxième ouverture (3), un actionneur thermostatique (4) apte à ouvrir l'obturateur et un moyen de rappel (5) apte à fermer l'obturateur, dans laquelle l'obturateur comprend une cage mobile (7,70) apte à coulisser relativement à une cage fixe (6,60) selon un axe sensiblement confondu avec l'axe de l'actionneur thermostatique (4), la cage mobile (7,70) ou la cage fixe (6,60) présentant au moins une fenêtre (8,80), le déplacement relative de la cage mobile (7,70) par rapport à la cage fixe permettant de sélectivement obturer ou libérer ladite au moins une fenêtre (8,80) et en ce que la cage mobile (7,70) est en matière plastique, **caractérisée en ce que** la cage mobile (7,70) est disposée, relativement à la cage fixe (6,60), du côté de la pression, afin que la pression appuie la cage mobile (7,70) contre la cage fixe (6,60), et est plus souple que la cage fixe (6,60) ou est munie d'au moins une découpe longitudinale (9) et la cage fixe (6,60) comprend une surface pleine en regard de ladite au moins une découpe longitudinale (9).

2. Vanne de régulation thermostatique selon la revendications 1, **caractérisé en ce que** le corps (1) comprend de plus un conduit (30) configuré pour être relié au circuit de fluide, le conduit (30) débouchant en aval de l'actionneur thermostatique (4).

3. Vanne de régulation thermostatique selon l'une quelconque des revendications précédentes, **caractérisée en ce que** la cage fixe (6,60) et/ou la cage mobile (7,70) présentent des formes tronconiques sensiblement complémentaires.

4. Vanne de régulation thermostatique selon l'une quelconque des revendications précédentes, **caractérisée en ce que** la cage mobile (7) est engagée sur la face intérieure de la cage fixe (6) et **en ce que** la cage fixe (6) est pourvue d'au moins une fenêtre (8).

5. Vanne de régulation thermostatique selon l'une des revendications 1 à 3, **caractérisée en ce que** la cage mobile (70) est engagée sur la face extérieure de la cage fixe et **en ce que** la cage fixe (60) est pourvue d'au moins une fenêtre (80).

6. Vanne de régulation thermostatique selon l'une quelconque des revendications précédentes, **caractérisée en ce que** ladite au moins une fenêtre (8,80) présente une forme fonction d'une loi d'ouverture souhaitée.

7. Vanne de régulation thermostatique selon la revendication précédente, **caractérisée en ce que** ladite forme est préférentiellement rectangulaire pour une loi proportionnelle, triangulaire pour une loi continûment variée, ou encore étagée pour une loi à débit étagé.

8. Vanne de régulation thermostatique selon l'une quelconque des revendications précédentes, **caractérisée en ce que** la vanne comprend également un premier moyen d'étanchéité statique (10), tel un joint torique, disposé, préférentiellement axialement, entre la cage fixe (6) et une première extrémité (12) du piston (7) et un deuxième moyen d'étanchéité statique (11), tel un joint torique, disposé, préférentiellement axialement, entre la cage fixe (6) et une deuxième extrémité (13) opposée du piston (7), de telle manière à assurer une étanchéité statique la cage mobile (7) étant en position fermée.

9. Boîtier d'entrée de fluide ou de sortie de fluide, pour régulation thermostatique d'un circuit de fluide, **caractérisé en ce qu'**il comprend une vanne de régulation thermostatique selon l'une quelconque des revendications précédentes.

## Patentansprüche

1. Thermostatisches Regelventil für einen Fluidkreislauf eines Kraftfahrzeugs, das einen geschlossenen Hohlkörper (1), eine erste Öffnung (2), eine in den Körper (1) mündende zweite Öffnung (3), einen Verschluss, der die erste Öffnung (2) von der zweiten Öffnung (3) trennt, einen thermostatischen Stellantrieb (4), der in der Lage ist, den Verschluss zu öffnen, und ein Rückstellmittel (5) umfasst, das in der Lage ist, den Verschluss zu schließen, wobei der Verschluss einen beweglichen Käfig (7, 70) umfasst, der in der Lage ist, sich relativ zu einem festen Käfig (6, 60) entlang einer Achse, die sich im Wesentlichen mit der Achse des thermostatischen Stellantriebs (4) deckt, zu verschieben, wobei der bewegliche Käfig (7, 70) oder der feste Käfig (6, 60) mindestens ein Fenster (8, 80) aufweist, wobei es die relative Bewegung des beweglichen Käfigs (7, 70) in Bezug auf den festen Käfig ermöglicht, das mindestens eine Fenster (8, 80) selektiv zu verschließen oder freizulegen, und dadurch, dass der bewegliche Käfig (7, 70) aus Kunststoffmaterial ist, **dadurch gekennzeichnet, dass** der bewegliche Käfig (7, 70) relativ zum festen Käfig (6, 60) auf der Druckseite angeordnet ist, damit der Druck den beweglichen Käfig (7, 70) gegen den festen Käfig (6, 60) drückt, und elastischer als der feste Käfig (6,60) oder mit mindestens einem länglichen Einschnitt (9) versehen ist, und der feste Käfig (6, 60) eine Vollfläche umfasst, die dem mindestens einen länglichen Einschnitt (9) zugewandt ist.

2. Thermostatisches Regelventil nach Ansprüchen 1, **dadurch gekennzeichnet, dass** der Körper (1) außerdem eine Leitung (30) umfasst, die so ausgelegt ist, dass sie mit dem Fluidkreislauf verbunden werden kann, wobei die Leitung (30) stromabwärts des thermostatischen Stellantriebs (4) mündet.

3. Thermostatisches Regelventil nach einem der vorstehenden Ansprüche, **dadurch gekennzeichnet, dass** der feste Käfig (6, 60) und/oder der bewegliche Käfig (7, 70) im Wesentlichen komplementäre Kegelstumpfformen aufweisen.

4. Thermostatisches Regelventil nach einem der vorstehenden Ansprüche, **dadurch gekennzeichnet, dass** der bewegliche Käfig (7) auf der Innenseite des festen Käfigs (6) eingreift, und dadurch, dass der feste Käfig (6) mit mindestens einem Fenster (8) versehen ist.

5. Thermostatisches Regelventil nach einem der Ansprüche 1 bis 3, **dadurch gekennzeichnet, dass** der bewegliche Käfig (70) auf der Außenseite des festen Käfigs eingreift, und dadurch, dass der feste Käfig (60) mit mindestens einem Fenster (80) versehen ist.

6. Thermostatisches Regelventil nach einem der vorstehenden Ansprüche, **dadurch gekennzeichnet, dass** das mindestens eine Fenster (8, 80) eine Form aufweist, die von einem gewünschten Öffnungsgesetz abhängig ist.

7. Thermostatisches Regelventil nach dem vorstehenden Anspruch, **dadurch gekennzeichnet, dass** die Form vorzugsweise bei einem Proportionalgesetz rechteckig, bei einem kontinuierlich variierenden Gesetz dreieckig, oder aber bei einem Gesetz mit gestuftem Durchfluss stufenförmig ist.

8. Thermostatisches Regelventil nach einem der vorstehenden Ansprüche, **dadurch gekennzeichnet, dass** das Ventil ebenfalls ein erstes statisches Dichtungsmittel (10), wie etwa eine Ringdichtung, das vorzugsweise axial zwischen dem festen Käfig (6) und einem ersten Ende (12) des Kolbens (7) angeordnet ist, und ein zweites statisches Dichtungsmittel (11), wie etwa eine Ringdichtung umfasst, das vorzugsweise axial zwischen dem festen Käfig (6) und einem gegenüberliegenden zweiten Ende (13) des Kolbens (7) angeordnet ist, sodass eine statische Dichtigkeit sichergestellt wird, wenn sich der bewegliche Käfig (7) in geschlossener Stellung befindet.

9. Fluideinlass- oder Fluidauslassgehäuse zur thermostatischen Regelung eines Fluidkreislaufs, **dadurch gekennzeichnet, dass** es ein thermostatisches Regelventil nach einem der vorstehenden Ansprüche umfasst.

## Claims

1. A thermostatic control valve for a fluid circuit of a motor vehicle comprising a closed hollow body (1), a first opening (2), a second opening (3) leading into the body (1), a shutter separating the first opening (2) from the second opening (3), a thermostatic actuator (4) adapted to open the shutter and a return means (5) adapted to close the shutter, wherein the shutter comprises a movable cage (7, 70) adapted to slide relative to a fixed cage (6, 60) along an axis substantially coincident with the axis of the thermostatic actuator (4), the movable cage (7, 70) or the fixed cage (6, 60) having at least one window (8, 80), the relative movement of the movable cage (7, 70) relative to the fixed cage enabling said at least one window (8, 80) to be selectively sealed or cleared and in that the movable cage (7, 70) is made of plastic material, **characterized in that** the movable cage (7,70) is disposed, relative to the fixed cage (6, 60), on the side of the pressure, so that the pressure presses the movable cage (7, 70) against the fixed cage (6, 60), and is more flexible than the fixed cage (6, 60) or is provided with at least one longitudinal cutout (9) and the fixed cage (6, 60) comprises a solid surface facing said at least one longitudinal cutout (9).

2. The thermostatic control valve according to claim 1, **characterized in that** the body (1) further comprises a conduit (30) configured to be connected to the fluid circuit, the conduit (30) leading downstream of the thermostatic actuator (4).

3. The thermostatic control valve according to any one of the preceding claims, **characterized in that** the fixed cage (6, 60) and/or the movable cage (7, 70) have substantially complementary frustoconical shapes.

4. The thermostatic control valve according to any one of the preceding claims, **characterized in that** the movable cage (7) is engaged on the internal face of the fixed cage (6) and **in that** the fixed cage (6) is provided with at least one window (8).

5. The thermostatic control valve according to any of claims 1 to 3, **characterized in that** the movable cage (70) is engaged on the external face of the fixed cage and **in that** the fixed cage (60) is provided with at least one window (80).

6. The thermostatic control valve according to any one of the preceding claims, **characterized in that** said at least one window (8, 80) has a shape depending on a desired opening law.

7. The thermostatic control valve according to the preceding claim, **characterized in that** said shape is preferably rectangular for a proportional law, triangular for a continuously varied law, or even stepped for a stepped flow law.

8. The thermostatic control valve according to any one of the preceding claims, **characterized in that** the valve also comprises a first static sealing means (10), such as an O-ring, disposed, preferably axially, between the fixed cage (6) and a first end (12) of the piston (7) and a second static sealing means (11), such as an O-ring, disposed, preferably axially, between the fixed cage (6) and an opposite second end (13) of the piston (7), so as to ensure static sealing, the movable cage (7) being in the closed position.

9. A fluid inlet or fluid outlet case, for thermostatic control of a fluid circuit, **characterized in that** it comprises a thermostatic control valve according to any one of the preceding claims.
